# EUROPÄISCHE PATENTSCHRIFT

(11) **EP 1 177 096 B1**
(45) Veröffentlichungstag und Bekanntmachung des Hinweises auf die Patenterteilung: **06.10.2004**
(21) Anmeldenummer: 00920584.0
(22) Anmeldetag: 27.03.2000
(51) Int. Cl.: B32B 27/32, B29C 45/00, B29C 45/16, B29C 45/14, B65D 65/40, C08G 61/08

(54) **Verwendung von MEHRSCHICHTBEHÄLTERN MIT VERBESSERTER HAFTUNG ZWISCHEN DEN POLYMERSCHICHTEN UND HERVORRAGENDEN BARRIEREEIGENSCHAFTEN**
Use of MULTILAYER CONTAINERS EXHIBITING AN IMPROVED ADHERENCE BETWEEN POLYMER LAYERS AS WELL AS EXCELLENT BARRIER CHARACTERISTICS
UTILISATION DE CONTENANTS MULTICOUCHES AYANT UNE ADHERENCE AMELIOREE ENTRE LES COUCHES POLYMERIQUES ET D'EXCELLENTES PROPRIETES BARRIERE

(30) Priorität: 09.04.1999 DE 19916141; 10.09.1999 DE 19943545
(43) Veröffentlichungstag der Anmeldung: 06.02.2002
(73) Patentinhaber: Ticona GmbH, 65451 Kelsterbach (DE)
(72) Erfinder: JACOBS, Alexandra, D-65527 Niedernhausen (DE); SCHULZ, Detlef, D-65779 Kelkheim (DE); SULLIVAN, Vincent, Morrisville, NC 27560 (US)
(86) Internationale Anmeldenummer: PCT/EP2000/002666
(87) Internationale Veröffentlichungsnummer: WO 2000/061370

(56) Entgegenhaltungen:
- EP-A- 0 649 737
- EP-A- 0 824 067
- EP-A- 0 968 816
- EP-A- 1 005 977
- WO-A-00/00399
- DE-A- 19 540 356
- PATENT ABSTRACTS OF JAPAN vol. 1995, no. 10, 30. November 1995 (1995-11-30) & JP 07 171858 A (TOPPAN PRINTING CO LTD), 11. Juli 1995 (1995-07-11) in der Anmeldung erwähnt
- PATENT ABSTRACTS OF JAPAN vol. 1998, no. 08, 30. Juni 1998 (1998-06-30) & JP 10 059343 A (KISHIMOTO AKIRA), 3. März 1998 (1998-03-03) in der Anmeldung erwähnt
- PATENT ABSTRACTS OF JAPAN vol. 1998, no. 01, 30. Januar 1998 (1998-01-30) & JP 09 239909 A (KISHIMOTO AKIRA), 16. September 1997 (1997-09-16) in der Anmeldung erwähnt
- PATENT ABSTRACTS OF JAPAN vol. 017, no. 073 (C-1026), 15. Februar 1993 (1993-02-15) & JP 04 276253 A (NIPPON ZEON CO LTD), 1. Oktober 1992 (1992-10-01) in der Anmeldung erwähnt
- DATABASE WPI Section Ch, Week 199712 Derwent Publications Ltd., London, GB; Class A17, AN 1997-127722 XP002142008 & JP 09 011416 A (KISHIMOTO A), 14. Januar 1997 (1997-01-14)

## Beschreibung

Die vorliegende Erfindung betrifft die Verwendung von Mehrschichtbehältern (multilayer containers) aus zwei äußeren Schichten A und einer Kernschicht B, die mindestens ein Cycloolefincopolymer enthält.

Aus JPA-4 276 253 sind Mehrschichtbehälter bekannt, die eine Schicht eines thermoplastischen gesättigten Norbornenpolymers enthalten, das durch ringöffnende Metathesepolymerisation hergestellt wurde, sowie eine weitere Schicht eines thermoplastischen Polymers mit guten Gasbarriereeigenschaften.

Aus JP-A-9 239 909, JP-A-7 171 858 sowie JP-A-9 011 416 sind Polyolefin-Polycycloolefin-Mehrschichtbehälter bekannt, die aufgrund einer weiteren Schicht eines thermoplastischen Polymers mit guten Sauerstoffbarriereeigenschaften für die Verpackung von Lebensmitteln geeignet sind. Beschrieben wird dabei auch die Verwendung einer haftvermittelnden Schicht, die der Verbesserung der Adhesion zwischen den unterschiedlichen Polymerschichten dient.

EP-A-824 067 sowie JP-A-1 0 059 343 beschreiben ebenfalls Mehrschichtbehälter aufgebaut aus Polyolefin- und Polycycloolefin-Schichten, die in der Lage sind, Geschmacksstoffe zurückzuhalten und somit z.B. für die Verpackung und Aufbewahrung von Zahnpasta geeignet sind. Es wird hierin beschrieben, daß die Schichten aus verschiedenen Polymeren durch Haftvermittler verbunden werden.

Die Aufgabe der vorliegenden Erfindung liegt darin, Mehrschichtbehälter mit verbesserter Haftung zwischen den Schichten bereitzustellen,
die für die Heißabfüllung von Flüssigkeiten verwendet werden können.

Die Aufgabe der vorliegenden Erfindung wird durch die Verwendung eines Mehrschichtbehälters gemäß Patentanspruch 1 gelöst.

Die erfindungsgemäß verwendeten Mehrschichtbehälter enthalten zwei äußere Schichten A und eine Kernschicht B, die mindestens ein

Cycloolefinpolymer enthält, enthaltend 0,1 bis 100 Gew.-%, bevorzugt 0,1 bis 99,9 Gew.-%, besonders bevorzugt 3 bis 75 mol% bezogen auf die Gesamtmasse des Cycloolefinpolymers, polymerisierte Einheiten, welche sich ableiten von mindestens einem polycyclischen Olefin der Formeln I, II, II', III, IV, V oder VI 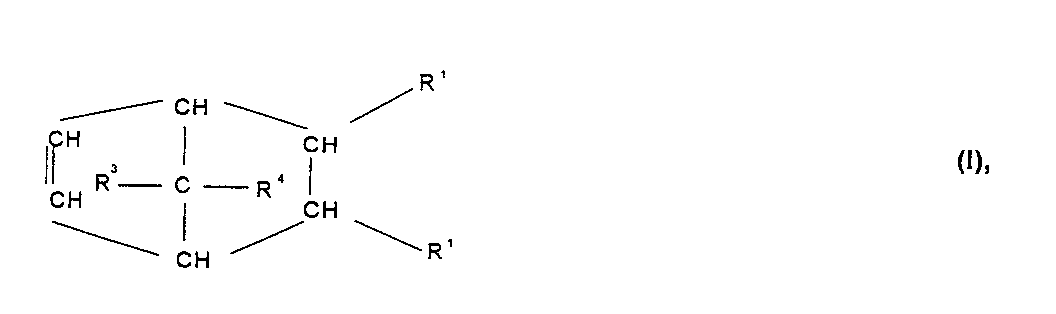 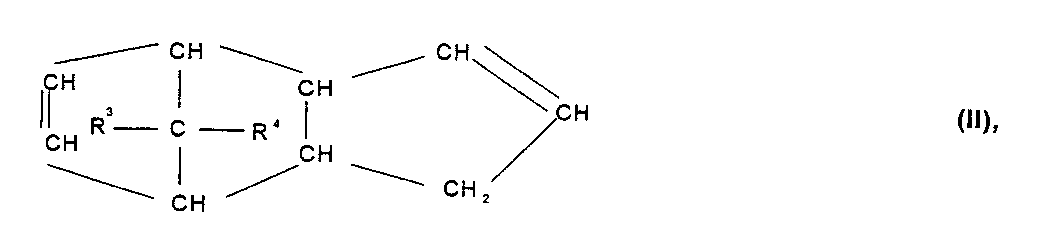 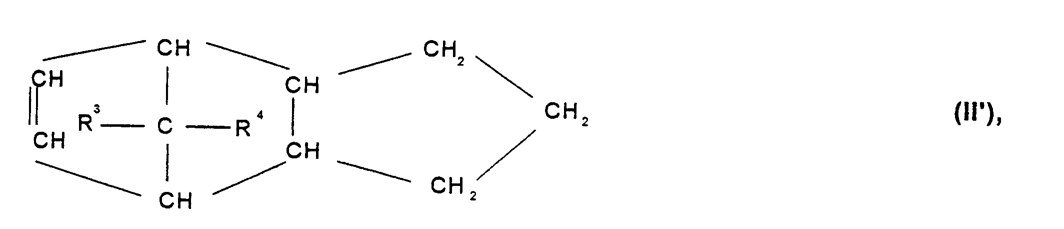 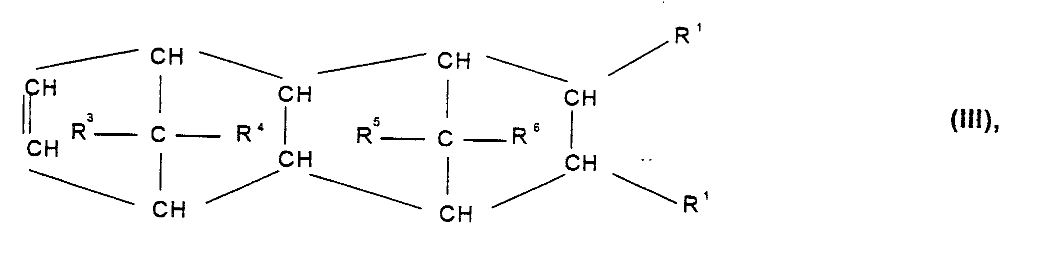 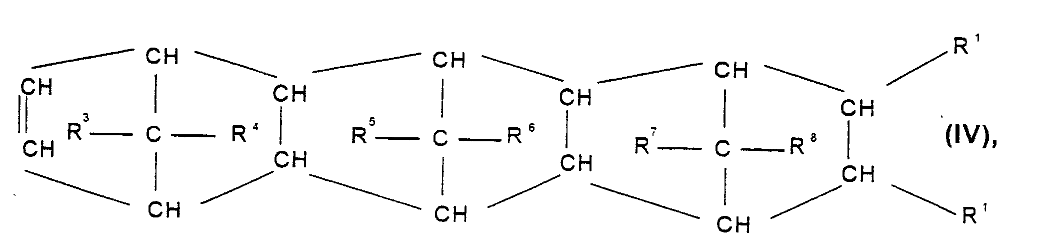 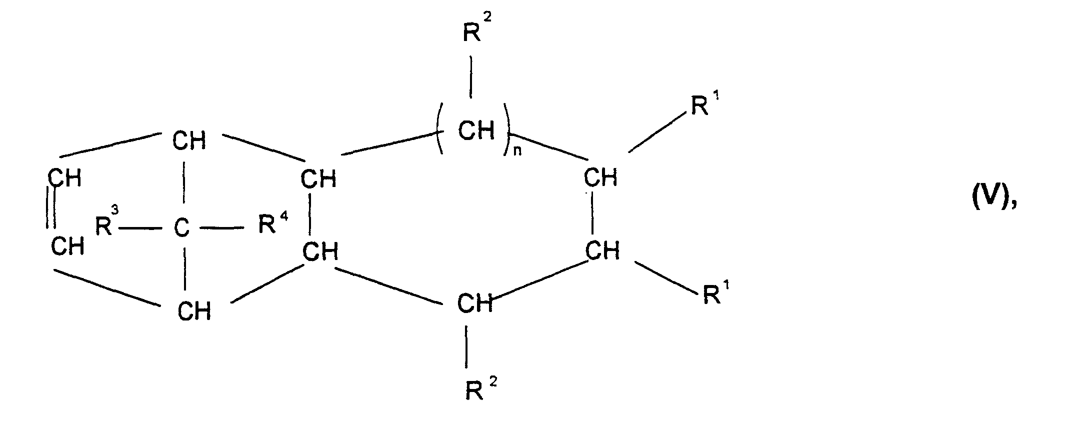 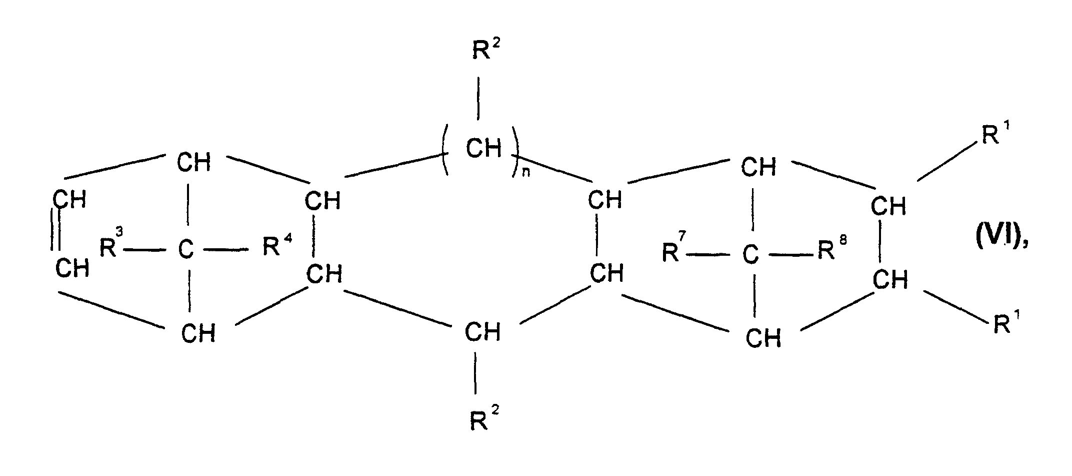 worin R¹, R², R³, R⁴, R⁵, R⁶, R⁷ und R⁸ gleich oder verschieden sind und ein Wasserstoffatom oder einen C₁-C₂₀-Kohlenwasserstoffrest, wie einen linearen oder verzweigten C₁-C₈-Alkylrest, C₆-C₁₈-Arylrest, C₇-C₂₀-Alkylenarylrest,
einen cyclischen oder acyclischen C₂-C₂₀-Alkenylrest bedeuten, oder einen gesättigten, ungesättigten oder aromatischen Ring bilden, wobei gleiche Reste R¹ bis R⁸ in den verschiedenen Formeln I bis VI eine unterschiedliche Bedeutung haben können, worin n Werte von 0 bis 5 annehmen kann, und enthaltend 0 bis 99,9 Gew.-%, bevorzugt 0,1 bis 99,9 Gew.-%, besonders bevorzugt 5 bis 80 mol% bezogen auf die Gesamtmasse des Cycloolefinpolymers, polymerisierte Einheiten, welche sich ableiten von einem oder mehreren acyclischen Olefinen der Formel VII 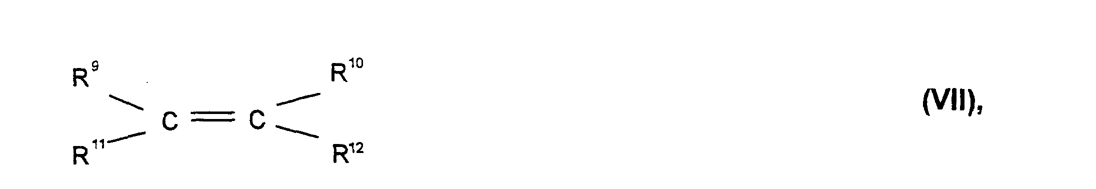 worin R⁹, R¹⁰, R¹¹ und R¹² gleich oder verschieden sind und ein Wasserstoffatom, einen linearen, verzweigten, gesättigten oder ungesättigten C₁-C₂₀-Kohlenwasserstoffrest wie einen C₁-C₈-Alkylrest oder einen C₆-C₁₈-Arylrest bedeuten.

Bei den cyclischen Olefinen eingeschlossen sind ebenfalls Derivate dieser cyclischen Olefine mit polaren Gruppen wie Halogen-, Hydroxyl-, Ester-, Alkoxyx-, Carboxy-, Cyano-, Amido-, Imido- oder Silylgruppen.

Außerdem können die erfindungsgemäß für mikrostrukturierte Bauteile verwendeten Cycloolefinpolymere 0 bis 45 Gew.-%, bezogen auf die Gesamtmasse des Cycloolefinpolymers, polymerisierte Einheiten enthalten, welche sich ableiten von einem oder mehreren monocyclischen Olefinen der Formel VIII 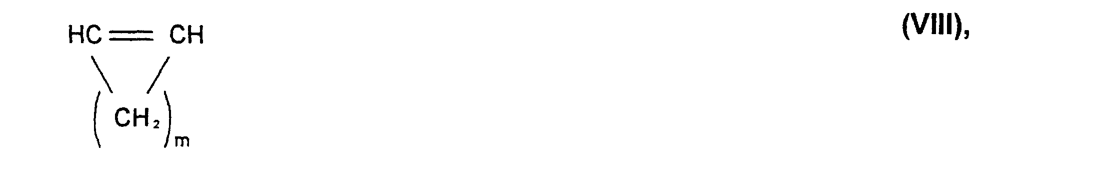 worin m eine Zahl von 2 bis 10 ist.

Bevorzugt im Sinne der Erfindung sind Cycloolefinpolymere, die polymerisierte Einheiten enthalten, welche sich ableiten von polycyclischen Olefinen der Formeln I oder III, und polymerisierte Einheiten, welche sich ableiten von acyclischen Olefinen der Formel VII.

Besonders bevorzugt sind Cycloolefinpolymere, die polymerisierte Einheiten enthalten, welche sich ableiten von Olefinen mit Norbornengrundstruktur, ganz besonders bevorzugt von Norbomen und Tetracyclododecen und gegebenenfalls Vinylnorbornen oder Norbornadien. Besonders bevorzugt sind auch Cycloolefinpolymere, die polymerisierte Einheiten enthalten, welche sich ableiten von acyclischen Olefinen mit endständigen Doppelbindungen wie α-Olefinen mit 2 bis 20 C-Atomen, ganz besonders bevorzugt Ethylen oder Propylen. Außerordentlich bevorzugt sind Norbornen/ Ethylenund Tetracyclododecen/ Ethylen-Copolymere.

Die Herstellung der Cycloolefinpolymere kann durch eine heterogene oder homogene Katalyse mit metallorganischen Verbindungen geschehen, die in einer Vielzahl von Patenten beschrieben ist.

Die erfindungsgemäß verwendeten Cycloolefinpolymere können hergestellt werden bei Temperaturen von -78 bis 200 °C und einem Druck von 0,01 bis 200 bar, in Gegenwart eines oder mehrerer Katalysatorsysteme, welche mindestens eine Übergangsmetallverbindung und gegebenenfalls einen Cokatalysator und gegebenenfalls ein Trägermaterial enthalten. Als Übergangsmetallverbindungen eignen sich Metallocene, insbesondere stereorigide Metallocene. Beispiele für Katalysatorsysteme, welche für die Herstellung der erfindungsgemäßen Cycloolefinpolymere geeignet sind, sind beschrieben in EP-A-407 870, EP-A-485 893 und EP-A-503 422. Auf diese Referenzen wird hier ausdrücklich Bezug genommen.

Die Herstellung der erfindungsgemäß verwendeten Cycloolefinpolymere kann unter Verwendung eines Metallocens als Übergangsmetallverbindung und einem Aluminoxan der Formel IX a 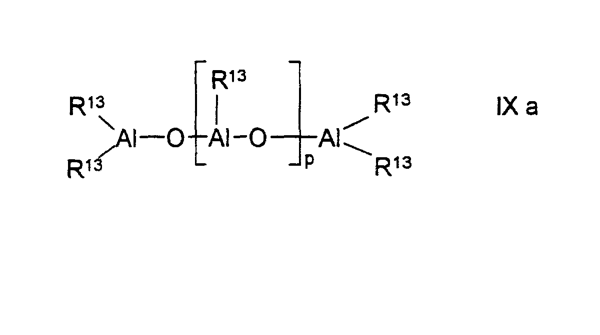 für den linearen Typ und/oder der Formel IX b 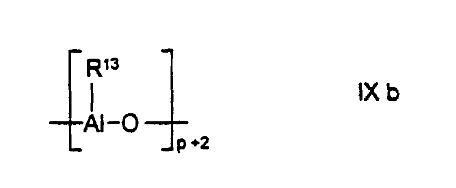 für den cyclischen Typ erfolgen, wobei in den Formeln IX a und IX b R13 eine c1-C6-Alkylgruppe oder Phenyl oder Benzyl bedeutet und p eine ganze Zahl von 2 bis 50 ist.

Die Übergangsmetallkomponente kann ein Metallocen der Formel X 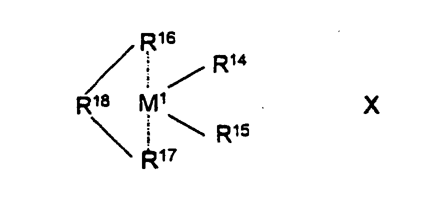 sein, worin
M¹ ein Metall der Gruppe 3 bis 10 oder der Lanthaniden-Reihe des Periodensystems der Elemente, bevorzugt Titan, Zirkonium. Hafnium, Vanadium, Niob oder Tantal ist, R¹⁴ und R¹⁵ gleich oder verschieden sind und ein Wasserstoffatom, ein Halogenatom. eine C₁-C₁₀-Alkylgruppe, eine C₁-C₁₀-Alkoxygruppe, C₆-C₁₀-Arylgruppe, eine C₆-C₁₀-Aryloxygruppe, eine C₂-C₁₀-Alkenylgruppe, eine C₇-C₄₀-Arylalkylgruppe, eine C₇-C₄₀-Alkylarylgruppe oder eine C₈-C₄₀-Arylalkenylgruppe bedeuten,
R¹⁶ und R¹⁷ gleich oder verschieden sind und einen ein- oder mehrkemigen Kohlenwasserstoffrest, welcher mit dem Zentralatom M¹ eine Sandwichstruktur bilden kann, bedeuten, 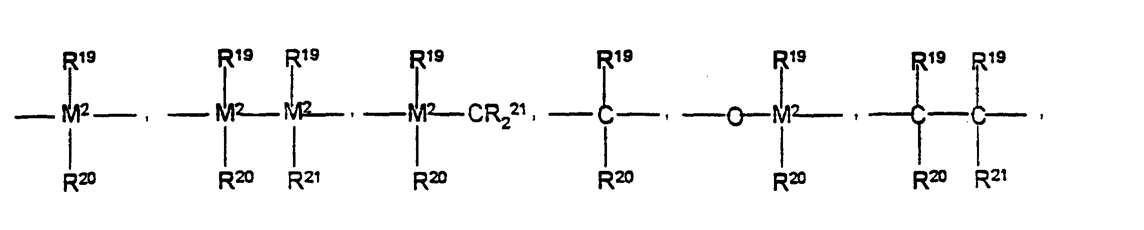 = BR¹⁹, AIR¹⁹, -Ge-, -Sn-, -O-, -S-, SO₂, NR¹⁹, CO, PR¹⁹ oder P(O)R¹⁹ ist, wobei R¹⁹, R²⁰ und R²¹ gleich oder verschieden sind und ein Wasserstoffatom, ein Halogenatom, eine C₁-C₁₀-Alkylgruppe, eine C₁-C₁₀-Fluoralkylgruppe, eine C₆-C₁₀-Fluorarylgruppe, C₆-C₁₀-Arylgruppe, eine C₆-C₁₀-Aryloxygruppe, eine C₁-C₁₀-Alkoxygruppe, eine C₂-C₁₀-Alkenylgruppe, eine C₈-C₄₀-Arylalkylgruppe, eine C₇-C₄₀-Alkylarylgruppe oder eine C₈-C₄₀-Arylalkenylgruppe bedeuten oder R¹⁹, R²⁰ und R²¹ jeweils mit den sie verbindenden Atomen einen Ring bilden, und
M² Silizium, Germanium oder Zinn ist.

Beispiele für eingesetzte Übergangsmetallverbindungen sind:
rac-Dimethylsilyl-bis-(1-indenyl)-zirkondichlorid,
rac-Dimethylgermyl-bis-(1-indenyl)-zirkondichlorid,
rac-Phenylmethylsilyl-bis-(1-indenyl)-zirkondichlorid,
rac-Phenylvinylsilyl-bis-(1-indenyl)-zirkondichlorid,
1-Silacyclobutyl-bis-(1-indenyl)-zirkondichlorid,
rac-Diphenyisilyl-bis-(1-indenyl)-hafniumdichlorid,
rac-Phenylmethylsilyl-bis-(1-indenyl)-hafniumdichlorid,
rac-Diphenyisilyl-bis-(1-indenyl)-zirkondichlorid,
rac-Ethylen-1,2-bis-(1-indenyl)-zirkondichlorid,
Dimethylsilyl-(9-fluorenyl)-(cyclopentadienyl)-zirkondichlorid,
Diphenylsilyl-(9-fluorenyl)-(cyclopentadienyl)-zirkondichlorid,
Bis(1-indenyl)-zirkondichlorid,
Diphenylmethylen-(9-fluorenyl)-cyclopentadienylzirkondichlorid,
Isopropylen-(9-fluorenyl)-cyclopentadienyl-zirkondichlorid,
rac-Isopropyliden-bis-(1-indenyl)zirkondichlorid,
Phenylmethylmethylen-(9-fluorenyl)-cyclopentadienyl-zirkondichlorid,
Isopropylen-(9-fluorenyl)-(1-(3-isopropyl)cyclopentadienyl)-zirkondichlorid,
Isopropylen-(9-fluorenyl)(1-(3-methyl)cyclopentadienyl)-zirkondichlorid,
Diphenylmethylen-(9-fluorenyl)(1-(3-methyl)cyclopentadienyl)-zirkondichlorid,
Methylphenylmethylen-(9-fluorenyl)(1-(3-methyl)cyclopentadienyl)-zirkondichlorid,
Dimethylsilyl-(9 fluorenyl)(1-(3-methyl)-cyclopentadienyl)-zirkondichlorid,
Diphenylsilyl-(9-fluorenyl)(1-(3-methyl)cyclopentadienyl)-zirkondichlorid,
Diphenylmethylen-(9-fluorenyl)(1-(3-tert.-butyl)cyclopentadienyl)-zirkondichlorid,
lsopropylen-(9-fluorenyl)(1-(3-tert.-butyl)cyclopentadienyl)-zirkondichlorid,
Isopropylen-(cyclopentadienyl)-(1-indenyl)-zirkondichlorid,
Diphenylcarbonyl-(cyclopentadienyl)-(1-indenyl)-zirkondichlorid,
Dimethylsilyl-(cyclopentadienyl)-(1-indenyl)-zirkondichlorid,
Isopropylen-(methylcyclopentadienyl)-(1-indenyl)-zirkondichlorid, 4-( η⁵cyclopentadienyl)-4,7,7-trimethyl-(η⁵-4,5,6,7-tetrahydroindenyl-zirkondichlorid,
[4-( η⁵-cyclopentadienyl)-4,7,7-triphenyl-( η⁵-4,5,6,7-tetrahydroindenyl)]zirkondichlorid,
[4-( η⁵-cyclopentadienyl)-4,7-dimethyl-7-phenyl-( η⁵-4,5,6,7-tetrahydroindenyl)]zirkondichlorid,
[4-(η⁵-3'-tert.-butylcyclopentadienyl)-4,7,7-triphenyl-( η⁵-4,5,6,7-tetrahydroindenyl)]zirkondichlorid,
[4-( η⁵-3'-tert.-butyl cyclopentadienyl)-4,7-dimethyl-7-phenyl-( η⁵-4,5,6,7-tetrahydroindenyl)]zirkondichlorid,
[4-( η⁵-3'-methylcyclopentadienyl)-4,7,7-trimethyl-( η⁵-4,5,6,7-tetrahydroindenyl)]zirkondichlorid,
[4-( η⁵-3'-methylcyclopentadienyl)-4,7,7-triphenyl-( η⁵-4,5,6,7-tetrahydroindenyl)]zirkondichlorid,
[4-(η⁵-3'-methylcyclopentadienyl)-4,7-dimethyl-7-phenyl-( η⁵-4,5,6,7-tetrahydroindenyl)]zirkondichlorid,
[4-(η⁵-3'-isopropylcyclopentadienyl)-4,7,7-trimethyl-( η⁵-4,5,6,7-tetrahydroindenyl)]zirkondichlorid,
[4-( η⁵-3'-isoproplycyclopentadienyl)-4,7,7-triphenyl-( η⁵-4,5,6,7-tetrahydroindenyl)]zirkondichlorid,
[4-(η⁵-3'-isopropylcyclopentadienyl)-4,7-dimethyl-7-phenyl-(η⁵-4,5,6,7-tetrahydroindenyl)]zirkondichlorid,
[4-( η⁵-cyclopentadienyl)( η⁵-4,5-tetrahydropentalen)]zirkondichlorid,
[4-(η⁵-cyclopentadienyl)-4-methyl-( η⁵-4,5-tetrahydropentalen)]zirkondichlorid,
[4-( η⁵-cyclopentadienyl)-4-phenyl-( η⁵-4,5-tetrahydropentalen)]zirkondichlorid,
[4-( η⁵-cyclopentadienyl)-4-phenyl-( η⁵-4,5-tetrahydropentalen)]zirkondichlorid,
[4-( η⁵-3'-methyl-cyclopentadienyl)( η⁵-4,5-tetrahydropentalen)]zirkondichlorid,
[4-( η⁵-3'-isopropylcyclopentadienyl)( η⁵-4,5-tetrahydropentalen)]zirkondichlorid,
[4-( η⁵-3'-benzyl-cyclopentadienyl)( η⁵-4,5-tetrahydropentalen)]zirkondichlorid,
[2,2,4Trimethyl-4-( η⁵-cyclopentadienyl)-( η⁵-4,5-tetrahydropentalen)]-zirkoniumdichlorid,
[2,2,4Trimethyl-4-( η⁵-(3,4-Di-isopropyl)cyclopentadienyl)-( η⁵-4,5-tetrahydropentalen)]-zirkoniumdichlorid.

Die Herstellung der Cycloolefinpolymere kann auch auf anderen, nachfolgend kurz skizzierten Wegen erfolgen. Katalysatorsysteme basierend auf Mischkatalysatoren aus Titansalzen und Aluminiumorganylen werden in DD-A-109 224 und DD-A-237 070 beschreiben. EP-A-156 464 beschreibt die Herstellung mit Katalysatoren auf Vanadiumbasis. EP-A-283 164, EP-A-407 870, EP-A-485 893 und EP-A-503 422 beschreiben die Herstellung von Cycloolefinpolymeren mit Katalysatoren basierend auf löslichen Metallocenkomplexen. Auf die in diesen Patenten zur Herstellung von Cycloolefinpolymeren beschriebenen Herstellungsverfahren und verwendeten Katalysatorsysteme wird hiermit ausdrücklich hingewiesen.

Die Herstellung erfindungsgemäß verwendeter Cycloolefinpolymere kann durch Homound/Oder Copolymerisation cyclischer, bevorzugt polycyclicher Olefine unter Ringerhalt erfolgen.

Die Cycloolefinpolymere können auch durch ringöffnende Polymerisation mindestens eines der Monomere der Formeln I bis VI und anschließende Hydrierung der erhaltenen Produkte hergestellt werden. Gegebenenfalls können die Cycloolefinpolymere auch durch ringöffnende Copolymerisation mindestens eines der Monomere der Formeln I bis VI mit weiteren, z.B. monocyclischen Monomeren der Formel VIII und anschließende Hydrierung der erhaltenen Produkte hergestellt werden. Die Herstellung der Cycloolefinpolymere ist in den japanischen Patenten JP-B-3-14882, JP-B-3-122137, JP-B-4-63807, JP-B-2-27424 und JP-B-2-276842 beschrieben. Auf die in diesen Patenten zur Herstellung von Cycloolefinpolymeren beschriebenen Herstellungsverfahren und verwendeten Katalysatorsysteme wird hiermit ausdrücklich hingewiesen. Eingeschlossen sind ebenfalls Derivate dieser cyclischen Olefine mit polaren Gruppen, wie Halogen-, Hydroxyl-, Ester-, Alkoxy-, Carboxy-, Cyano-, Amido-, Imido- oder Silylgruppen.

Hydrierte Polymere und Copolymere, wie z.B. von Styrol und Dicyclopentadien sind ausdrücklich ebenfalls geeignet und werden im Rahmen dieser Anmeldung ebenfalls als Cycloolefinpolymere bezeichnet.

Die Polymerisation kann auch mehrstufig erfolgen, wobei auch Blockcopolymere entstehen können (DE-A-42 05 416).

Cycloolefinpolymere sind bevorzugt amorphe, transparente und farblose Werkstoffe. Die Wärmeformbeständigkeiten der Cycloolefinpolymere lassen sich in einem weiten Bereich einstellen. Als Anhaltspunkt für die Wärmeformbeständigkeit, wie sie nach ISO 75 Teil 1 und Teil 2 an Spritzgußformkörpern bestimmt werden kann, läßt sich für Cycloolefinpolymere die Glasübergangstemperatur heranziehen. Die beschriebenen Cycloolefinpolymere weisen Glasübergangstemperaturen zwischen -50 und 220 °C auf. Bevorzugt sind Glasübergangstemperaturen zwischen 0 und 180 °C, besonders bevorzugt sind Glasübergangstemperaturen zwischen 40 und 180 °C.

Die mittlere Molmasse der Cycloolefinpolymere läßt sich durch Wasserstoff-Dosierung, Variation der Katalysatorkonzentration oder Variation der Temperatur in bekannter Weise steuern. Die in den erfindungsgemäßen mikrostrukturierten Bauteilen enthaltenen Cycloolefinpolymere weisen massenmittlere Molmassen Mw zwischen 1.000 und 10.000.000 g/mol auf. Bevorzugt sind massenmittlere Molmassen Mw zwischen 5.000 und 5.000.000 g/mol, besonders bevorzugt sind massenmittlere Molmassen Mw zwischen 10.000 und 1.200.000 g/mol.

Die in den Mehrschichtbehältern für die erfindungsgemäße Verwendung enthaltenen Cycloolefinpolymere weisen Viskositätszahlen zwischen 5 und 1.000 ml/g auf. Bevorzugt sind Viskositätszahlen zwischen 20 und 500 ml/g, besonders bevorzugt sind Viskositätszahlen zwischen 30 und 300 ml/g.

Die Mehrschichtbehälter für die erfindungsgemäße Verwendung können auch in einer oder mehreren Schichten Legierungen aus mindestens einem Cycloolefinpolymer und mindestens einem weiteren Polymer in beliebigem Mischungsverhältnissen enthalten.

Für die Legierungen mit Cycloolefinpolymeren sind bevorzugt folgende Polymere einsetzbar: Polyethylen, Polypropylen, Ethylen-Propylen-Copolymere, Polybutylen, Poly(4-methyl-1-penten ), Polyisopren, Polyisobutylen, Naturkautschuk, Poly(1-methylenmetacrylat), weitere Polymetacrylate, Polyacrylat, Acrylat-Metacrylat-Copolymere, Polystyrol, Styrol-Acrylnitril-Copolymer, Bisphenol-A-Polycarbonat, weitere Polycarbonate, aromatische Polyestercarbonate, Polyethylenterephthalat, Polybutylenterephthalat, amorphe Polyacrylat, Nylon - 6, Nylon - 66, weitere Polyamide, Polyaramide, Polyetherketone, Polyoxymethylen, Polyoxyethylen, Polyurethane, Polysulfone, Polyethersulfone, Polyvinylidenfluorid.

Für Legierungen von Cycloolefinpolymeren und Polyolefinen werden bevorzugt folgende Polyolefine eingesetzt: Homopolymere des Ethylens und Propylens sowie Copolymere aus diesen beiden Monomeren, Copolymere auf der Basis von Ethylen mit linearen oder verzweigten Olefinen, wie Buten, Penten, Hexen, Hepten, Octen, Nonen, Decen, Undecen und Dodecen, Copolymere auf der Basis von Propylen mit linearen oder verzweigten Olefinen, wie Buten, Penten, Hexen, Hepten, Octen, Nonen, Decen, Undecen und Dodecen, Terpolymere aus Ethylen, Propylen und linearen oder verzweigten Olefinen, wie Buten, Penten, Hexen, Hepten, Octen, Nonen, Decen, Undecen und Dodecen.

Die Herstellung der Legierungen kann durch übliche Verfahren erfolgen, z.B. durch gemeinsame Extrusion der Polymerkomponenten aus der Schmelze, gegebenenfalls unter Verwendung weiterer Additive, und anschließende Granulierung.

Cycloolefinpolymere lassen sich aus der Schmelze oder auch aus der Lösung verarbeiten. Geeignete Lösungsmittel sind aprotische unpolare Kohlenwasserstoffe wie Dekalin oder Gemische aus linearen und verzweigten Kohlenwasserstoffen

Die Mehrschichtbehälter für die erfindungsgemäße Verwendung enthalten neben mindestens einer Schicht, die mindestens ein Cycloolefinpolymer enthält, mindestens eine weitere Schicht eines anderen Polymers oder einer Legierung weitere Polymere. Geeignete Polymere sind z.B. Polyethylen, Polypropylen, Ethylen-Propylen-Copolymere, Polybutylen, Poly (4-methyl-1-penten), Polyisopren, Polyisobutylen, Naturkautschuk, Poly (1-methylenmetacrylat); weitere Polymethacrylate, Polyacrylat, Acrylat-Methacrylat-Copolymere, Polystyrol, Styrol-Acrylnitril-Copolymer, Polyacrylnitril, Bisphenol-A-Polycarbonat, weitere Polycarbonate, aromatische Polyestercarbonate, Polyethylenterephthalat, Polybutylenterephthalat, weitere Polyester, amorphe Polyacrylate, Nylon-6, Nylon-66, weiter Polyamide, Polyaramide, Polyetherketone, Polyoxymethylen, Polyoxyethylen, Polyurethane, Polysulfone, Polyethersulfone, Polyvinylchlorid, Polyvinylidenchlorid, Polyvinylidenfluorid.

Besonders geeignet sind Polymere, die gute Gasbarriereeigenschaften aufweisen, wie z.B. Polyester wie z.B. Polyethylenterephthalat, Polyethylennaphthalat sowie flüssigkristalline Polyester, Polyacrylnitril, Polyvinylchlorid, Polyvinylidenchlorid, Ethylvinylalkohol, Polyamide und weitere.

Die Herstellung der Mehrschichtbehälter kann durch Mehrkomponenten-Spritzguß, Mehrkomponenten-Spritzblasen sowie Mehrkomponenten-Spritzstreckblasen erfolgen.

Die Herstellung von Vorformlingen für Mehrkomponenten-Spritzblasen sowie Mehrkomponenten-Spritzstreckblasen durch Mehrkomponenten-Spritzguß führt zur Mehrschichtvorformlingen. Die Herstellung von Mehrschichtvorformlingen ist z.B. durch Coinjektion zweier oder mehrerer Materialien oder durch Überspritzen der ersten Schicht eines Materials mit einem oder mehreren weiteren Materialien möglich.

Die Herstellung der Mehrschichtbehälter kann unter Verwendung von Additiven in üblichen Mengen erfolgen, wie z.B. Plastifiziermittel, UV-Stabilisatoren, optische Aufheller, Antioxidantien, Anstistatika, Wärmestabilisatoren oder verstärkende Zusätze wie Glasfasern, Kohlefasern oder Hochmodulfasern wie Polyaramide oder flüssigkristalline Polyester oder ähnliche. Außerdem können Füllstoffe wie anorganische Materialien, Talkum, Titandioxid oder ähnliches verwendet werden. Die genannten Additive und Füllstoffe können bereits vor der Verarbeitung den Polymermaterialien zugegeben worden sein oder aber während der Verarbeitung zugegeben werden.

Es ist möglich, die verschiedenen Polymerschichten durch Verwendung von haftvermittelnden Schichten zu verbinden. Geeignete Materialien hierfür sind z. B. Polyolefine wie die Materialien Tafmer®, Admer® der Firma Mitsui Chemicals.

Es wurde jedoch überraschend gefunden, daß die erfindungsgemäß verwendeten Cycloolefinpolymere eine hervorragende Haftung zu den anderen Schichten aufweisen. Es kann daher auf eine Verwendung von haftvermittelnden Schichten verzichtet werden, was aufgrund der geringeren Materialkosten und des geringeren Aufwands bei der Herstellung der Mehrschichtbehälter von großem ökonomischem Vorteil ist.

Die erfindungsgemäß verwendeten Cycloolefincopolymere zeigen überraschenderweise bei Herstellung von Mehrschichtsystemen ohne haftvermittelnde Schichten eine deutliche Verbesserung der mechanischen Eigenschaften.

Für eine Optimierung der Haftung zwischen den verschiedenen Schichten der erfindungsgemäßen Mehrschichtbehälter ist eine Abstimmung des Schrumpfverhaltens der unterschiedlichen, erfindungsgemäß verwendeten Materialien möglich.

Die Mehrschichtbehälter für die erfingungsgemäße Verwendung weisen gegenüber Behältern, die nur aus Cycloolefinpolymeren hergestellt wurden, eine verbesserte Beständigkeit gegenüber Schlag- und Stoßbeanspruchungen auf sowie ein verbesserte Beständigkeit gegenüber Ölen und Fetten. Aufgrund ihrer besonderen Eigenschaften sind die Mehrschichtbehälter außerordentlich gut für die Heißabfüllung von Flüssigkeiten in diese Behälter geeignet, z.B. im Lebensmittelbereich.

Die Erfindung wird anhand der folgenden Beispiele näher erläutert.

### Beispiele

### Beispiel 1 - 2K Spritzgiessen

### Inlay-Spritzguß von Topas auf einem Zugstab-Werkzeug mit zwei Kavitäten

Für die Versuche wurde eine Krauss Maffei Spritzgießmaschine des Typs KM 90-210B und ein Werkzeug zur Herstellung von DIN-Norm Zugstäben mit zwei Kavitäten in S-Form verwendet.

Zur Vorbereitung wurden von allen Materialien Zugstäbe hergestellt und halbiert. Der angußfeme Teil des Zugstabs wurde als Inlay für den Zwei-Komponenten Spritzguß verwendet. Hierzu wurde der halbierte Zugstab (Inlay) an seiner ursprünglichen Stelle in das Werkzeug eingelegt und jeweils mit dem zweiten Polymer (überspritztes Polymer; siehe Tabelle 1) die fehlende Hälfte des Zugstabs aufgespritzt. An den so entstandenen Zugstäben mit Bindenaht wurden im weiterem Verlauf Zugversuche nach ISO 527-1 zur Bestimmung der Bruchspannung und Bruchdehnung durchgeführt (siehe Tabelle 1 ).

Die Verarbeitungsbedingungen sind der Tabelle 2 und 3 zu entnehmen.

**Tabelle 1**

| Überspritztes Polymer | Vorgelegter Probekörper | Bruchspannung | Bruchdehnung |
|---|---|---|---|
| | | (MPa) | (%) |
| LLDPE Innovex | Topas 6013 Lot 74093 | 3,9 | 11,8 |
| Hostalen PPR 1042 | Topas 6013 Lot 74093 | 3,7 | 3,6 |
| Impet PET TS6 | Topas 6013 Lot 74093 | 8,3 | 4,4 |
| Nylon MXD6 | Topas 6013 Lot 74093 | - | - |
| Bayer PC CD 2005 | Topas 6013 Lot 74093 | - | - |
| DSM Stanylan LDPE- | Topas 8007 Lot 54028 | 2,4 | 8,1 |
| Hostalen PPR 1042 | Topas 8007 Lot 54028 | 9,2 | 7,0 |
| Impet PET T86 | Topas 8007 Lot 54028 | 8,7 | 5,3 |
| Nylon MXD6 | Topas 8007 Lot 54028 | 990 | 6,3 |
| Bayer PC CD 2005 | Topas 8007 Lot 54028 | - | - |
| Topas 6013 Lot 74093 | DSM Stanylan LDPE | 6,8 | 53,1 |
| Topas 6013 Lot 74093 | Hostalen PPR 1042 | 1,0 | 0,85 |
| Topas 6013 Lot 74093 | Impet PET T86 | 3,3 | 2,6 |
| Topas 6013 Lot 74093 | Nylon MXD6 | 3,7 | 2,7 |
| Topas 6013 Lot 74093 | Bayer PC CD 2005 | - | - |
| Topas 8007 Lot 54028 | DSM Stanylan LDPE | 4,4 | 16,9 |
| Topas 8007 Lot 54028 | Hostalen PPR 1042 | 8,5 | 6,6 |
| Topas 8007 Lot 54028 | Impet PET T86 | 4,8 | 3,3 |
| Topas 8007 Lot 54028 | Nylon MXD6 | 5,0 | 3,2 |
| Topas 8007 Lot 54028 | Bayer PC CD 2005 | 6,0 | 3,9 |

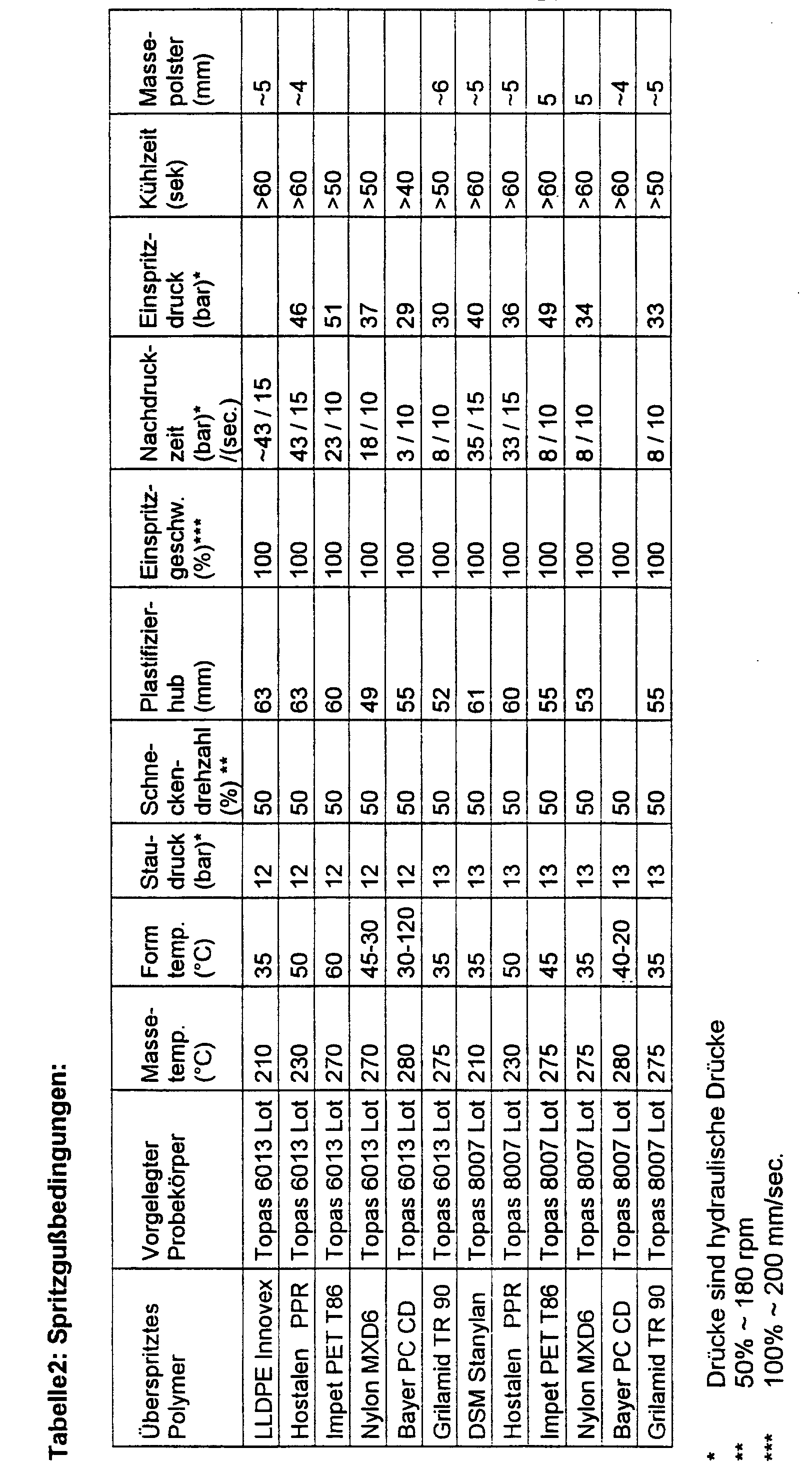

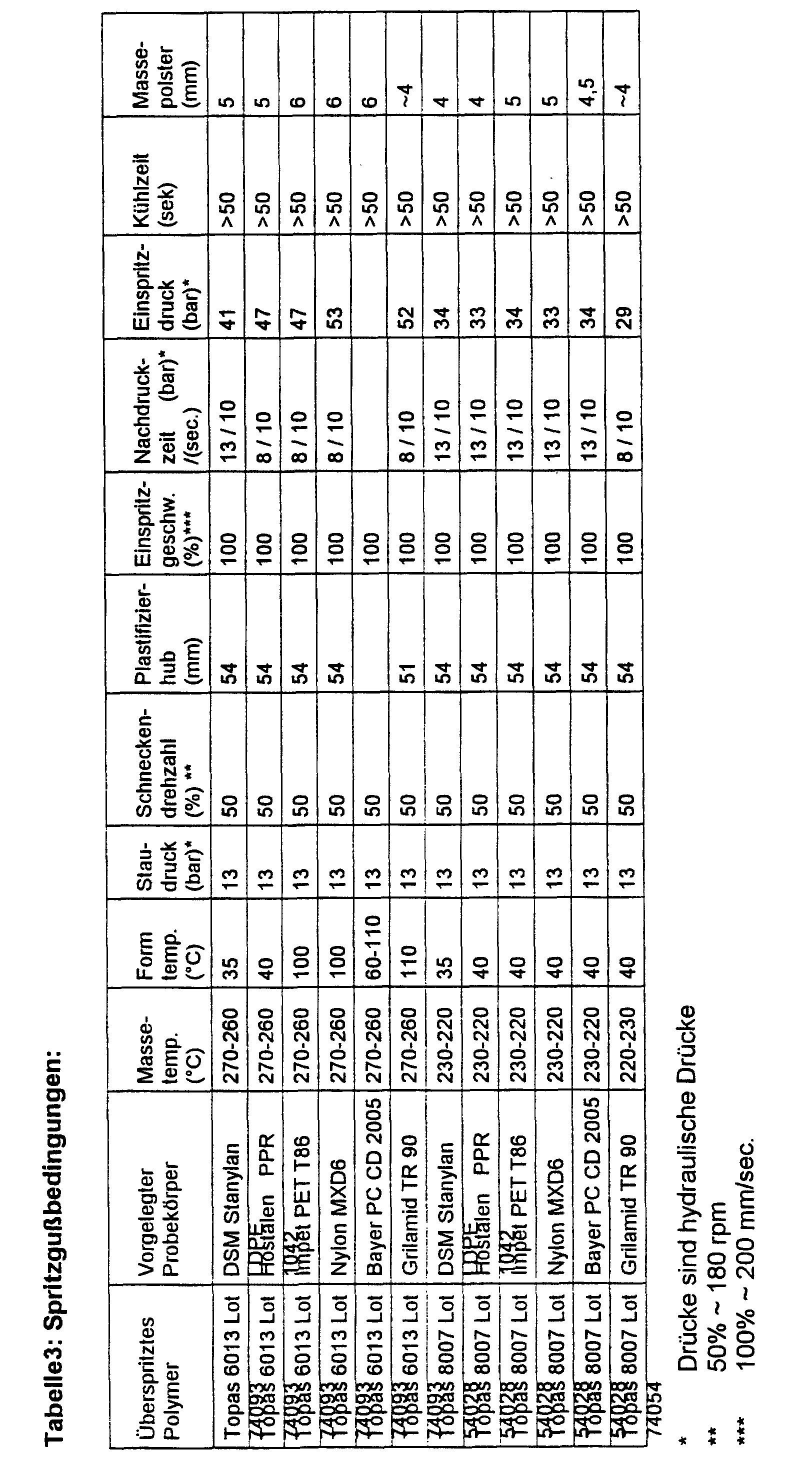

### Beispiel 2 - 2K Spritzgiessen

### Koinjektions-Spritzgiessen von Topas auf einem Plattenwerkzeug

Verwendet wurden eine 3 K Klöckner Ferromatik Spritzgußmaschine und eine zentral mit Stangenanguß angespritzte Platte ( 300 x 215 x 3 mm ).

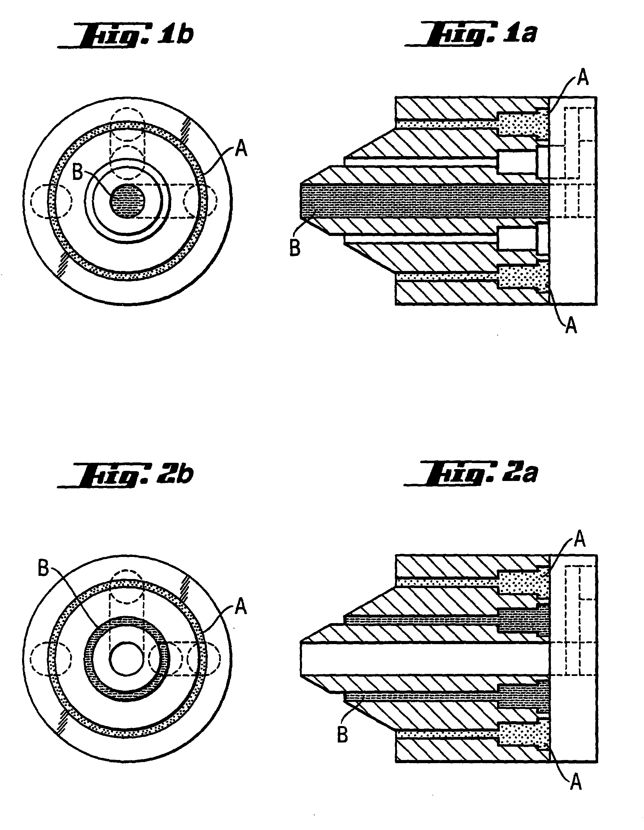

Mittels eines speziellen Spritzkopfes mit gesteuerten und gefederten Nadelverschlüssen wurde mit einer vorgeschalteten 2 K - Verteilscheibe die Spritzkopfdüse so gewählt, daß die Kemkomponente zentral, von der 2ten rohrförmig umhüllt austretenden Materialschmelze gleichzeitig oder beliebig zeitlich versetzt in die Kavität gespritzt wurde. (s.Abb.1)

Die Vermeidung des Vermischens der beiden Materialströme wurde durch die Wahl der jeweiligen Fließfähigkeiten und insbesondere durch die Wahl der Einspritzfolge/Prozeßführung beeinflußt.

Die Ausbildung der Kemschicht, hier Komponente B, wurde bei transparenten, bzw. bei leicht eingefärbten Materialien kontrolliert. Als Färbungsmittel wurde ein Topas 5013 (Cycloolefincopolymer / Ticona; HDT/B (0,45 N/mm²) = 130°C; Fließindex MVR bei 260°C, 2,16kg = 56ml/min) Sandoplast Blau B Masterbatch in einer Konzentration von ca. 2% zugesetzt.

Die Auswahl der Komponenten A der äußeren Schicht sowie der Komponente B der Kernschicht ist in Tabelle 4 zusammengefaßt.

**Tabelle 4:**

| **Materialkombinationen:** | | | |
|---|---|---|---|
| **B-Komponente** | | **A-Komponente** | |
| Topas 8007 | Cycloolefincopolymer / Ticona HDT/B (0,45 N/mm²) = 75°C Fließindex MVR bei 260°C, 2,16kg = 30ml/min | Metocen PP X50081 94-2710 / Tagor | Transparentes Polypropylen |
| Topas 8007 | Cycloolefincopolymer / Ticona HDT/B (0,45 N/mm²) = 75°C Fließindex MVR bei 260°C, 2,16kg = 30ml/min | K-Resin KR-01 / Phillips | Styrol-Butadien-Copolymer |
| Topas 6013 | Cycloolefincopolymer / Ticona HDT/B (0,45 N/mm²) = 130°C Fließindex MVR bei 260°C, 2,16kg = 13ml/min | PET Polyester T86 W03 / Kosa | Transparenter Polyester |
| Topas 6013 | Cycloolefincopolymer / Ticona HDTIB (0,45 N/mm²) = 130°C Fließindex MVR bei 260°C, 2,16kg = 13ml/min | Grilamid TR 90 / EMS-Chemie | Transparentes Polyamid |
| Topas 6013 | Cycloolefincopolymer / Ticona HDT/B (0,45 N/mm²) = 130°C Fließindex MVR bei 260°C, 2,16kg = 13ml/min | Nylon MXD 6 / Mitsui | Transparentes Polyamid |
| Topas 6013 | Cycloolefincopolymer / Ticona HDT/B (0,45 N/mm²) = 130°C Fließindex MVR bei 260°C, 2,16kg = 13ml/min | Trogamid CX7323 / Degussa-Hüls | Transparentes Polyamid |
| Topas 6013 | Cycloolefincopolymer / Ticona HDT/B (0,45 N/mm²) = 130°C Fließindex MVR bei 260°C, 2,16kg = 13ml/min | Metocen PP X50081 94-2710 / Tagor | Transparentes Polypropylen |

### Prozeßführung:

Die verschiedenen Materialkombinationen wurden jeweils bei zwei unterschiedlichen Einspritzprofilen verarbeitet. Die Profile unterschieden sich im Ablauf des Einspritzvorgangs der Umhüllungskomponente (Komponente A) und der Kernkomponente (Komponente B).

### Beispiel 2a:

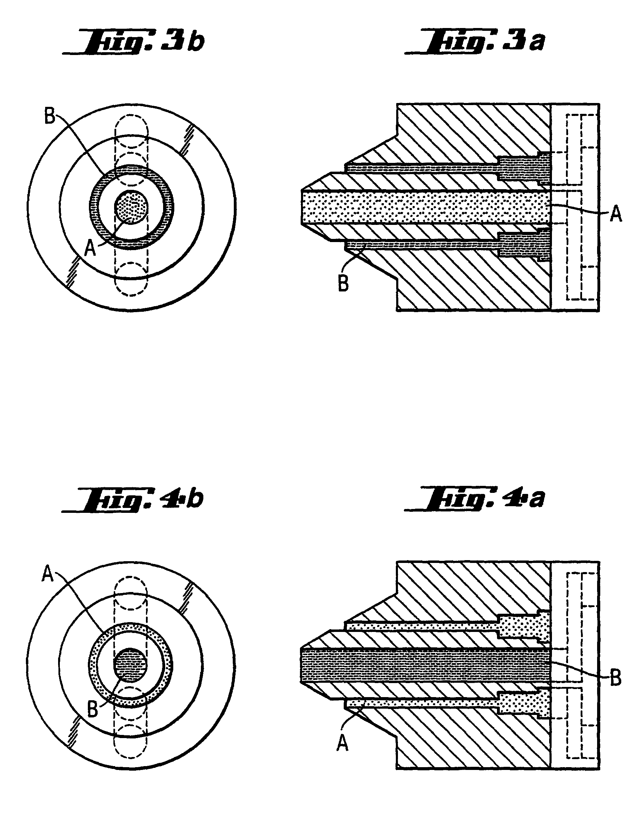

Bei dem Einspritzprofil 2a betrug die zeitliche Verzögerung der Komponente B zur Komponente A ca. zwei Sekunden, zu welcher Zeit bereits 82 Prozent der Menge der Komponente A eingespritzt waren. Das Einspritzprofil 2a ist am Beispiel Polyester/Topas 6013 exemplarisch dargestellt in Abb. 2a.

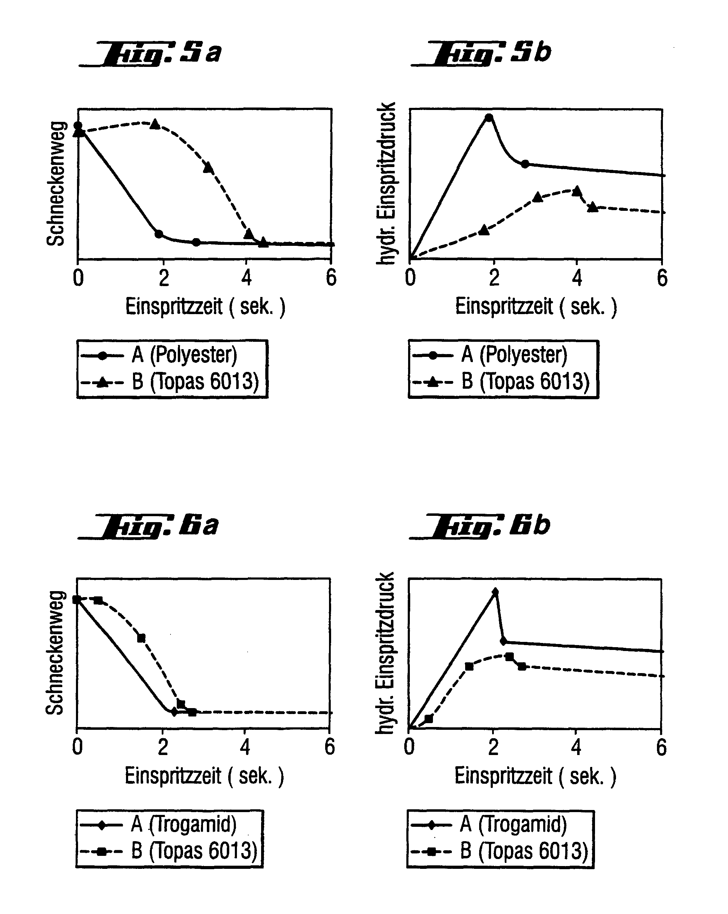

Beispiel 2b: Bei dem Einspritzprofil 2b betrug die zeitliche Verzögerung der Komponente B zur Komponente A nur ca. 0,5 Sekunden. Danach wurden ca. 90 Prozent der verbleibenden Restmengen simultan gespritzt. Das Einspritzprofil 2b ist am Beispiel Trogamid/Topas 6013 exemplarisch dargestellt in Abb. 2b.

In beiden Fällen wurde zum Abschluß des jeweiligen Spritzvorgangs der Anguß mit der Komponente A versiegelt. Weitere Verarbeitungsparameter zu den Versuchen sind in der Tabelle 6 aufgeführt.

Ein Durchbrechen der Umhüllungsschicht durch die Kemkomponente wurde nicht beobachtet, auch nicht bei der Verwendung von sehr leichtfließendem Umhüllungsmaterial wie Metocen PP X50081.

Die Schichtdickenverteilung kann über die jeweiligen Dosiervolumina, Spritzdrücke und Spritzgeschwindigkeiten der unabhängig voneinander regelbaren 2 Spritzgießaggregate beeinflußt werden, während die Lage der Kemschicht über die Werkzeugtemperierung verschoben werden kann.

Mit den oben beschriebenen Prozeßbedingungen konnten gleichmäßige Schichtdickenverteilungen und eine gute Transparenz der Platten erreicht werden. Die Platten wurden außerdem hinsichtlich Verbundhaftung und Verzugsneigung beurteilt (siehe Tabelle 5).

**Tabelle 5:**

| **Versuchsergebnisse:** | | | | |
|---|---|---|---|---|
| **Spritz- guß- Profil** | **Materialkombination** A-Komponente / B-Komponente | **Verbund- haftung** | **Trübung** | **Verzugsneigung** |
| **2a I** | **Metocen PP / Topas 8007** | **++** | o | - |
| **2b I** | **Metocen PP / Topas 8007** | **++** | +o | - |
| **2a II** | **K-Resin / Topas 8007** | + | +o | +o |
| **2b II** | **K-Resin / Topas 8007** | + | + | +o |
| **2a III** | **Metocen PP / Topas 6013** | + | o | - |
| **2b III** | **Metocen PP / Topas 6013** | + | +o | - |
| **2a IV** | **Trogamid / Topas 6013** | +o | + | +o |
| **2b IV** | **Trogamid / Topas 6013** | +o | ++ | +o |
| **2a V** | **Grilamid / Topas 6013** | o | + | + |
| **2b V** | **Grilamid / Topas 6013** | o | + | + |
| **2a VI** | **PET Polyester / Topas 6013** | - | o- | + |
| **2b VI** | **PET Polyester / Topas 6013** | - | o | + |
| **2a VII** | **Nylon MXD6 / Topas 6013** | o- | o- | + |
| **2b VII** | **Nylon MXD6 / Topas 6013** | o- | o | + |

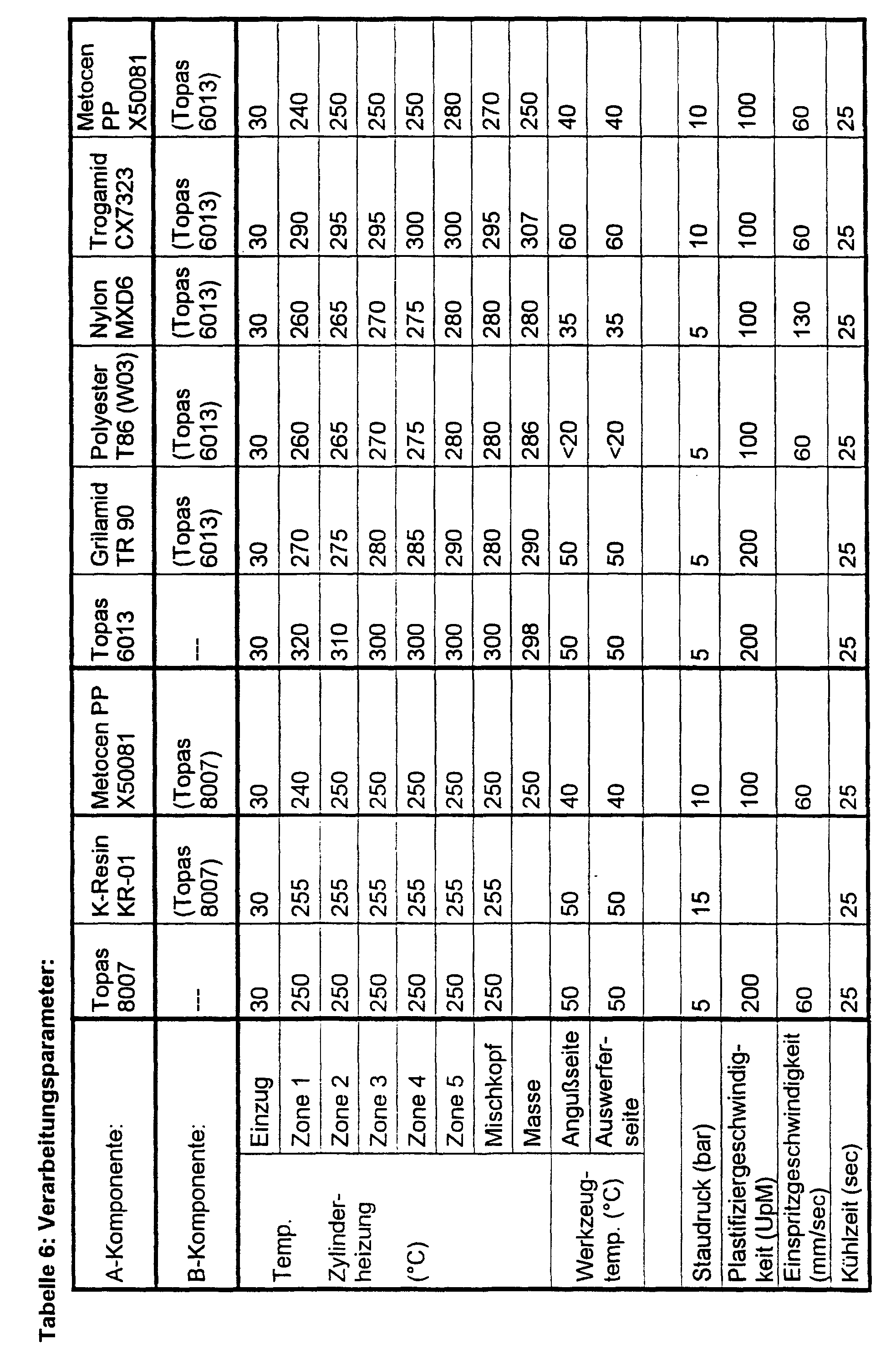

## Patentansprüche

1. Verwendung eines Mehrschichtbehälters aus zwei äußeren Schichten A und einer Kernschicht B,
die mindestens ein Cycloolefinpolymer enthält, enthaltend 0,1 -100 Gew.-%, bezogen auf die Gesamtmasse des Cycloolefinpolymers, polymerisierte Einheiten, welche sich ableiten von mindestens einem polycyclischen Olefin 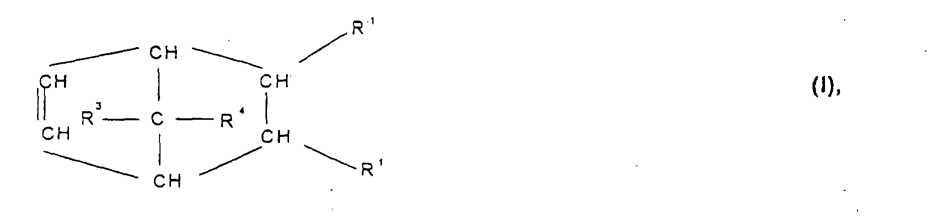 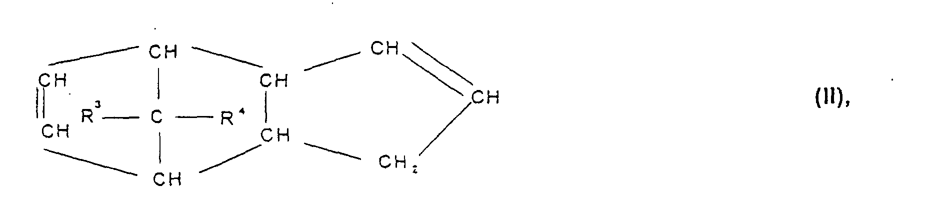 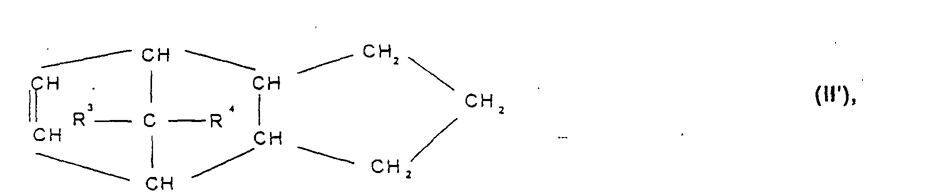 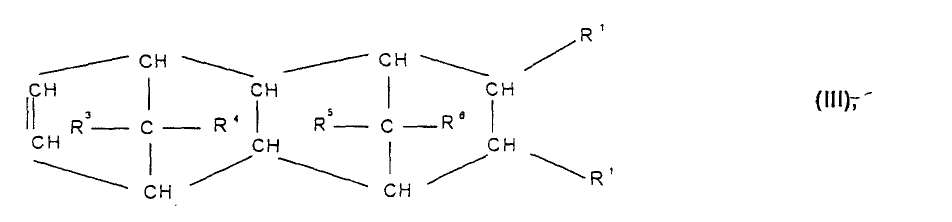 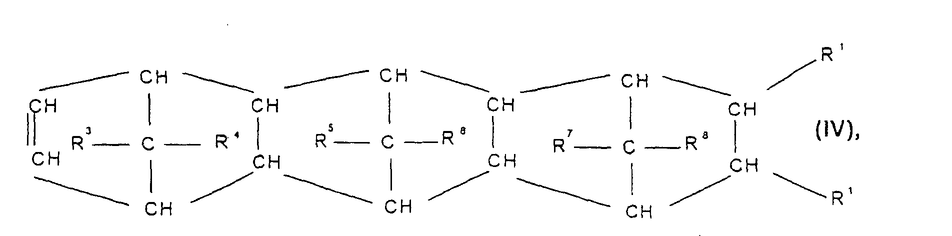 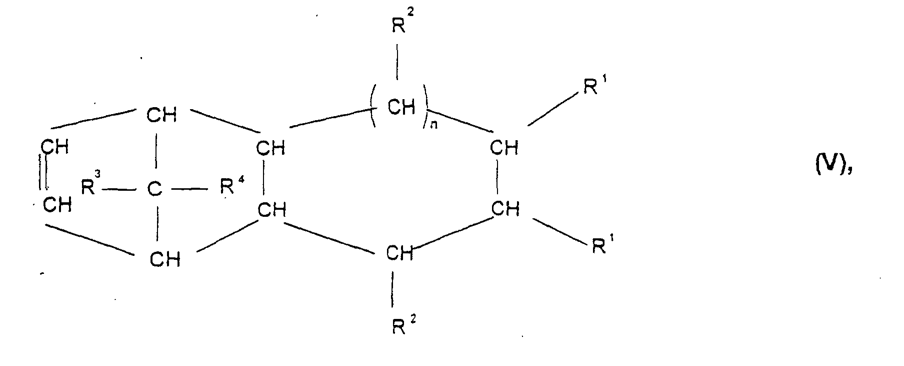 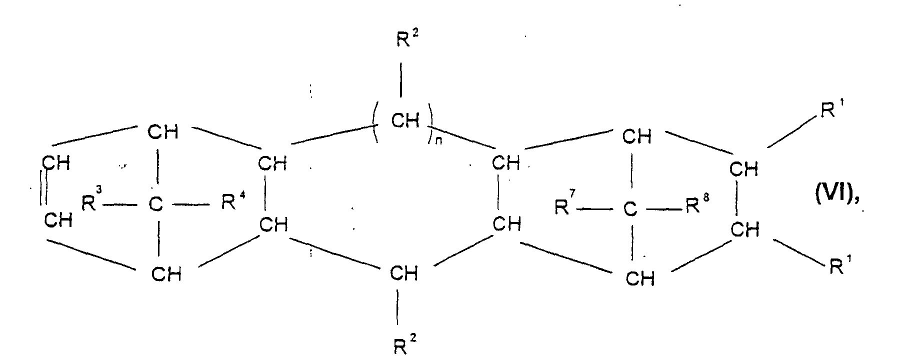 der Formeln I, II, II', III, IV, V oder VI
worin R¹, R², R³, R⁴, R⁵, R⁶, R⁷ und R⁸ gleich oder verschieden sind und ein Wasserstoffatom oder einen C₁-C₂₀-Kohlenwasserstoffrest, wie einen linearen oder verzweigten C₁-C₈-Alkylrest, C₆-C₁₈-Arylrest, C₇-C₂₀-Alkylenarylrest, einen cyclischen oder acyclischen C₂-C₂₀-Alkenylrest bedeuten, oder einen gesättigten, ungesättigten oder aromatischen Ring bilden, wobei gleiche. Reste R¹ bis R⁸ in den verschiedenen Formeln I bis VI eine unterschiedliche Bedeutung haben können, worin n Werte von 0 bis 5 annehmen kann, und enthaltend 0 bis 99,9 Gew-%, bezogen auf die Gesamtmasse des Cycloolefinpolymers, polymerisierte Einheiten, welche sich ableiten von einem oder mehreren acyclischen Olefinen der Formel VII 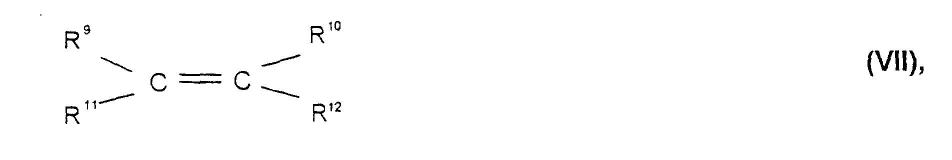 worin R⁹, R¹⁰, R¹¹ und R¹² gleich oder verschieden sind und ein Wasserstoffatom, einen linearen, verzweigten, gesättigten oder ungesättigten C₁-C₂₀-Kohlenwasserstoffrest wie einen C₁-C₈-Alkylrest oder einen C₆-C₁₈-Arylrest bedeuten, und enthalten d 0 bis 45 Gew.-%, bezogen auf die Gesamtzusammensetzung des Cycloolefinpolymers, polymerisierte Einheiten, welche sich ableiten von einem oder mehreren monocyclischen Olefinen der Formel VIII, 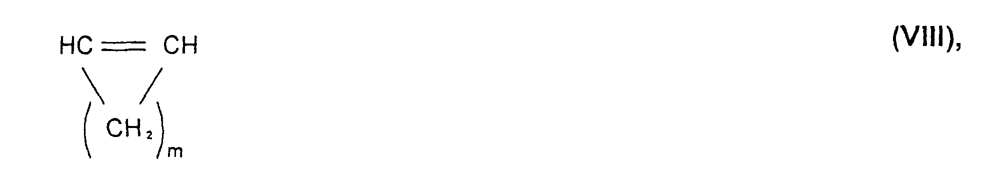 worin m eine Zahl von 2 bis 10 ist,
für die Heißabfüllung von Flüssigkeiten.

## Claims

1. The use of a multilayer container comprising two outer layers A and a core layer B which comprises at least one cycloolefin polymer comprising 0.1-100% by weight, based on the total mass of the cycloolefin polymer, of polymerized units derived from at least one polycyclic olefin of the formula I, II, II', III, IV, V or VI 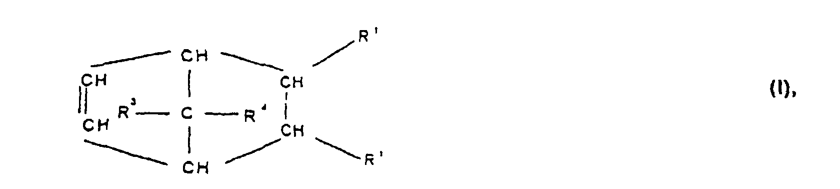 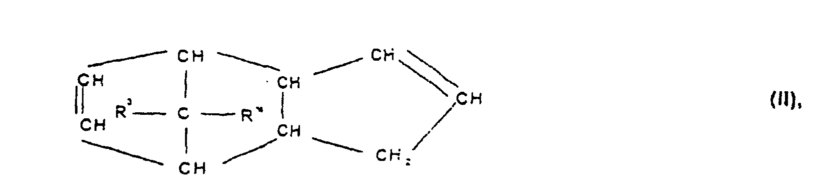 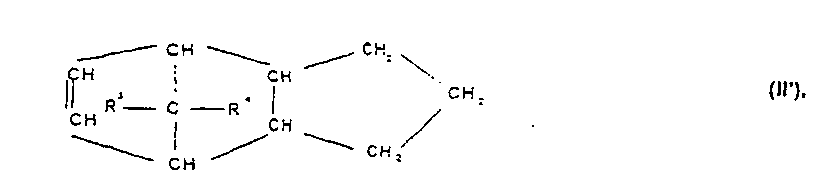 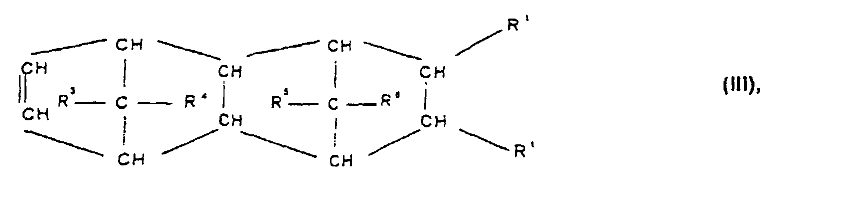 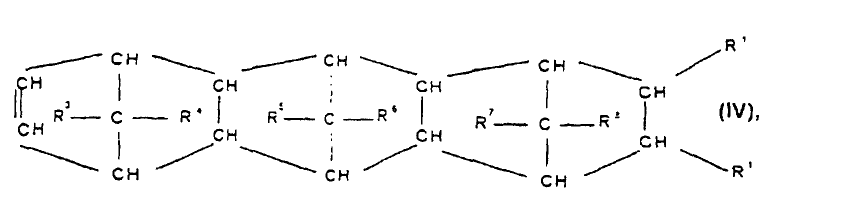 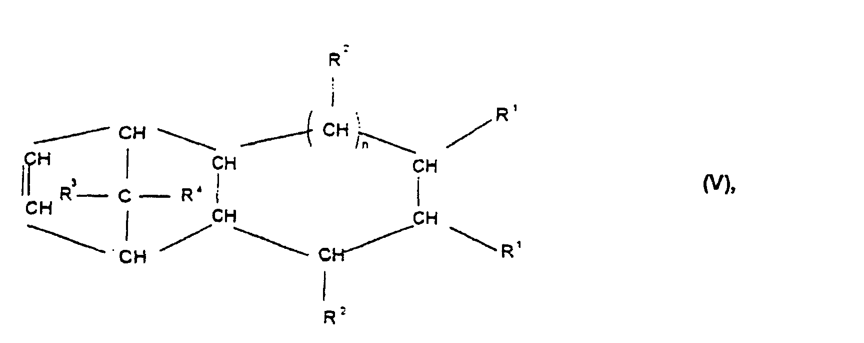 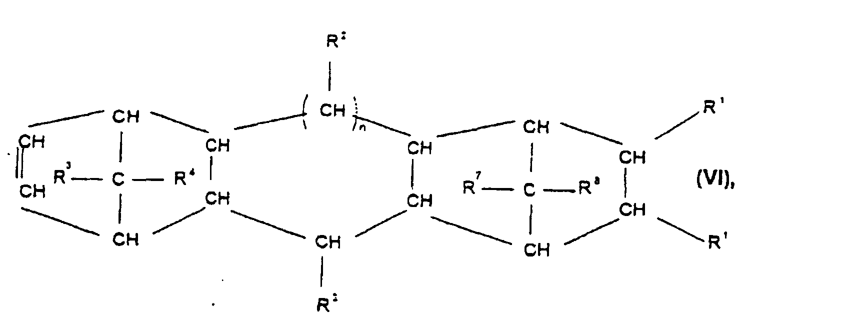 where R¹, R², R³, R⁴, R⁵, R⁶, R⁷ and R⁸ are identical or different and are each a hydrogen atom or a C₁-C₂₀-hydrocarbon radical such as a linear or branched C₁-C₈-alkyl radical, C₆-C₁₈-aryl radical, C₇-C₂₀-alkylenaryl radical, a cyclic or acyclic C₂-C₂₀-alkenyl radical or form a saturated, unsaturated or aromatic ring, where identical radicals R¹ to R⁸ in the various formulae I to VI may have different meanings and n is from 0 to 5, and from 0 to 99.9% by weight, based on the total mass of the cycloolefin polymer, of polymerized units derived from one or more acyclic olefins of the formula VII 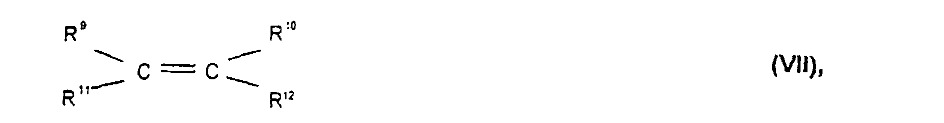 where R⁹, R¹⁰, R¹¹ and R¹² are identical or different and are each a hydrogen atom or a linear, branched, saturated or unsaturated C₁-C₂₀-hydrocarbon radical such as a C₁-C₈-alkyl radical or a C₆-C₁₈-aryl radical, and from 0 to 45% by weight, based on the total composition of the cycloolefin polymer, of polymerized units derived from one or more monocyclic olefins of the formula VIII 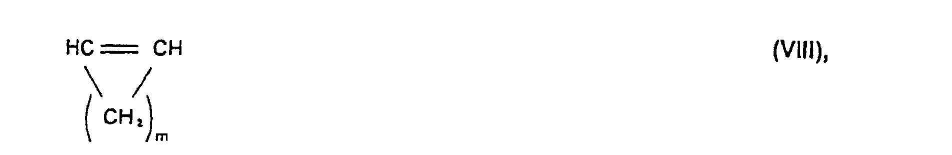 where m is from 2 to 10,
for hot packaging of liquids.

## Revendications

1. Utilisation d'un récipient multicouche constitué par deux couches extérieures A et une couche centrale B, qui contient au moins un polymère de cyclooléfine, contenant 0,1 à 100% en poids, par rapport à la masse totale du polymère de cyclooléfine, d'unités polymérisées, qui sont dérivées d'au moins une oléfine polycyclique 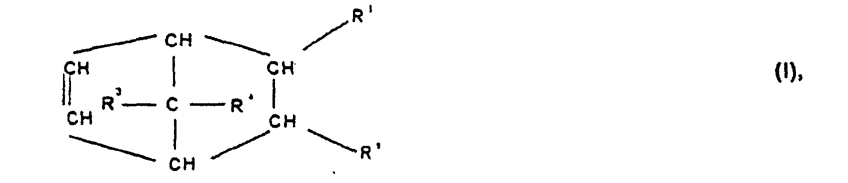 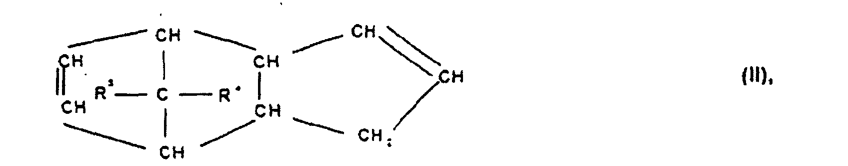 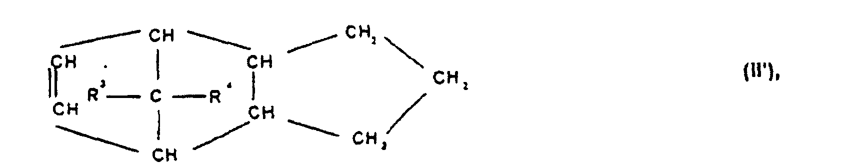 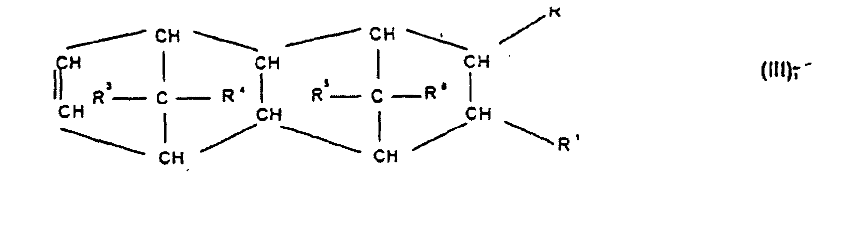 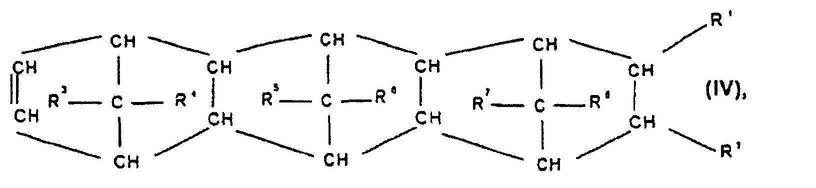 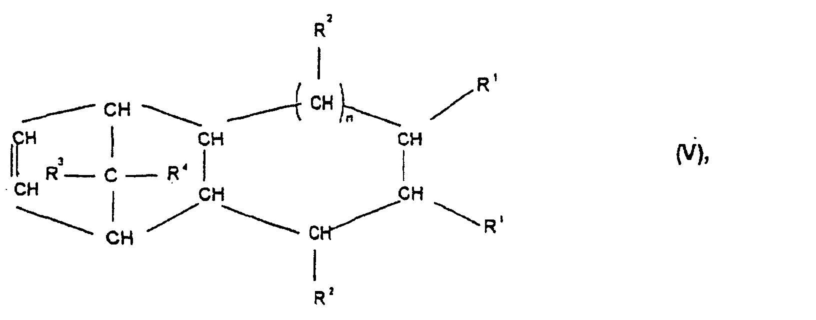 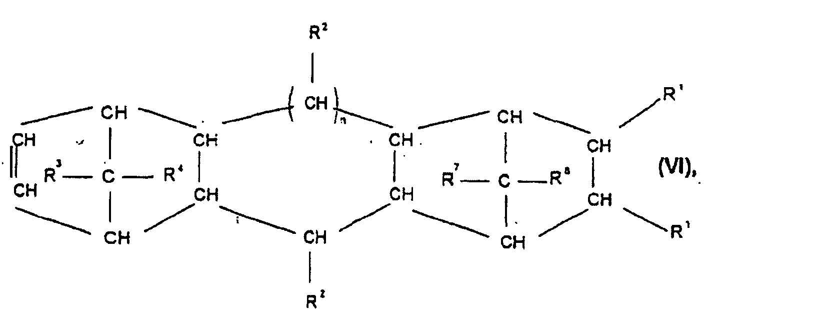 des formules I, II, II', III, IV, V ou VI
dans lesquelles R¹, R², R³, R⁴, R⁵, R⁶, R⁷ et R⁸ sont identiques ou différents et signifient un atome d'hydrogène ou un radical hydrocarboné en C₁ à C₂₀, tel qu'un radical alkyle en C₁ à C₈ linéaire ou ramifié, un radical aryle en C₆ à C₁₈, un radical alkylènearyle en C₇ à C₂₀, un radical alcényle en C₂ à C₂₀ cyclique ou acyclique ou forment un cycle saturé, insaturé ou aromatique, des radicaux R¹ à R⁸ identiques dans les différentes formules I à VI pouvant avoir une signification différente, dans lesquelles n peut valoir 0 à 5 et
contenant 0 à 99,9% en poids, par rapport à la masse totale du polymère de cyclooléfine, d'unités polymérisées qui peuvent être dérivées d'une ou de plusieurs oléfines acycliques de formule VII 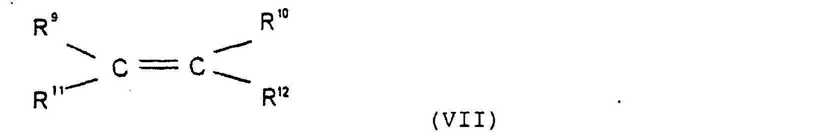 dans laquelle R⁹, R¹⁰, R¹¹ et R¹² sont identiques ou différents et signifient un atome d'hydrogène, un radical hydrocarboné en C₁ à C₂₀ linéaire, ramifié, saturé ou insaturé, tel qu'un radical alkyle en C₁ à C₈ ou un radical aryle en C₆ à C₁₈, et
contenant 0 à 45% en poids, par rapport à la composition totale du polymère de cyclooléfine, d'unités polymérisées qui sont dérivées d'une ou de plusieurs oléfines monocycliques de formule VIII 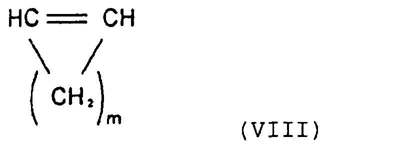 dans laquelle m est un nombre de 2 à 10,
pour le transvasement à chaud de liquides.
